(19) Europäisches Patentamt
European Patent Office
Office européen des brevets

(11) **EP 1 908 672 B1**

(12) **EUROPÄISCHE PATENTSCHRIFT**

(45) Veröffentlichungstag und Bekanntmachung des Hinweises auf die Patenterteilung:
**07.04.2010 Patentblatt 2010/14**

(51) Int Cl.:
***B62D 55/06*** *(2006.01)*

(21) Anmeldenummer: **06020981.4**

(22) Anmeldetag: **06.10.2006**

(54) **Raupenfahrzeug**

Tracked vehicle

Véhicule à chenilles

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**09.04.2008 Patentblatt 2008/15**

(73) Patentinhaber: **Rolic Invest Sarl**
**1724 Luxembourg (LU)**

(72) Erfinder:
- **Pelletier, Michel**
  **Canton de Shefford**
  **Quebec J2M 1X7 (CA)**
- **Runggaldier, Martin**
  **39047 St. Christina (IT)**

(74) Vertreter: **Eccetto, Mauro et al**
**Studio Torta S.r.l.**
**Via Viotti, 9**
**10121 Torino (IT)**

(56) Entgegenhaltungen:
DE-A1- 2 254 276    DE-A1- 10 320 523
DE-U1- 29 515 866    FR-A1- 2 336 292

- **PISTENBULLY.COM: "fire in red by PistenBully" Februar 2006 (2006-02), KÄSSBOHRER GELÄNDEFAHRZEUG AG , LAUPHEIM (DE) , XP002421334 vgl. "Technical Data PistenBully"**
- **PISTENBULLYUSA.COM: "SCOUT" Januar 2006 (2006-01), KÄSSBOHRER ALL TERRAIN VEHICLES INC. , RENO, NEVADA (US) , XP002421335 vgl. technische Daten.**

**Beschreibung**

Die vorliegende Erfindung bezieht sich auf ein als Raupenfahrzeug ausgebildetes Pistenpräparationsfahrzeug mit einem von einem Antrieb antreibbaren Fahrwerk, das mehrere an Achsen gelagerte Räder für eine Laufkette aufweist, wobei das Fahrwerk eine maximale Spurbreite W und zwischen vorderster und hinterster Achse der Räder eine Traktionslänge L aufweist.

Die Ausbildung des Fahrwerks ist bei Pistenpräparationsfahrzeugen von erheblicher Relevanz, da diese die Geländeeignung des Fahrzeugs entscheidend mitbestimmt. In den letzten Jahren ist man aus Gründen einer optimierten Flächenleistung und einer verbesserten Zeiteffizienz dazu übergegangen, möglichst breite Raupen, Räumschilder und Fräsen zur Bewältigung der Schneemengen bei gleichzeitig hoher Antriebsleistung anzustreben. Dieses Streben gemäß den vorstehend genannten Idealen geht zu Lasten der Manövrierfähigkeit, d.h. solche breiten Raupen drehen beim Stand der Technik unzufriedenstellend, vor allem im weichen Schnee.

Ein Pistenpräparationsfahrzeug nach dem Oberbegriff des Anspruchs 1 wird in der Brochüre PISTENBULLY.COM: "fire in red by PistenBully", vom Februar 2006 (2006-02), durch KÄSSBOHRER GELÄNDEFAHRZEUG AG , LAUPHEIM (DE), XP002421334, offenbart. Das Steuerverhältnis (W/L) dieses Fahrzeugs beträgt etwa 1,5 und der Antrieb weist eine Leistung von 400 PS auf.

Aufgabe der vorliegenden Erfindung ist es daher, ein Raupenfahrzeug der eingangs erwähnten Gattung mit guter Manövrierfähigkeit bei gleichzeitig hoher Leistung vorzuschlagen.

Dies wird erfindungsgemäß in einer vorteilhaften Ausgestaltung dadurch erreicht, dass das Steuerverhältnis berechnet als Traktionslänge dividiert durch Spurbreite kleiner gleich 1,4 beträgt und dass der Antrieb eine Leistung von mindestens 450 PS aufweist.

Das Steuerverhältnis F repräsentiert die Manövrierbarkeit des Fahrzeuges:

$$\text{Steuerverhältnis } F = \frac{\text{Traktionslänge } L}{\text{Spurbreite } W}$$

Die Traktionslänge L ist der Achsabstand zwischen vorderster Achse und hinterster Achse des Fahrzeuges, an der die Antriebsräder und/oder Tragräder für die Laufkette gelagert sind. Somit entspricht die Traktionslänge L im Wesentlichen der Laufkettenlänge, die den Boden kontaktiert. (Die Längenangaben für die Traktionslänge L und der Spurbreite W sind in gleichen Dimensionen anzugeben, vorzugsweise in Metern)

Die Spurbreite W ist der Abstand zwischen rechtem und linkem Rad auf einer gemeinsamen Achse auf gegenüberliegenden Seiten des Fahrzeuges.

Je kleiner das Steuerverhältnis S ist, desto besser ist die Manövrierbarkeit des Fahrzeuges. Je höher dieser Wert ausfällt, desto höher ist auch die Steigfähigkeit des Fahrzeuges, der Grad der Manövrierbarkeit wird jedoch dabei herabgesetzt.

Versuche der Anmelderin haben gezeigt, dass ein Steuerverhältnis S in der Größenordnung von 1,4 der beste Kompromiss zwischen Manövrierbarkeit und Steigfähigkeit ist.

Gemäß der Erfindung ist vorgesehen, dass der Antrieb eine Leistung von mindestens 450 PS, vorzugsweise mindestens 500 PS, aufweist. Günstigerweise ist jedoch vorgesehen, dass der Antrieb eine Leistung von über 500 PS aufweist. Durch die Kombination der vorstehend genannten Leistungsangaben mit dem im Rahmen der Erfindung definierten Steuerverhältnis S kann eine optimierte Verbindung von Manövrierfähigkeit, Schubkraft und Steigfähigkeit ermöglicht werden.

Die weiteren Einzelheiten der Erfindung werden anhand der nachfolgenden Figurenbeschreibung erläutert. Dabei zeigt:

Fig. 1 ein Pistenpräparationsfahrzeug in der Vorderansicht, und
Fig. 2 das Pistenpräparationsfahrzeug aus Fig. 1 in einer Seitenansicht.

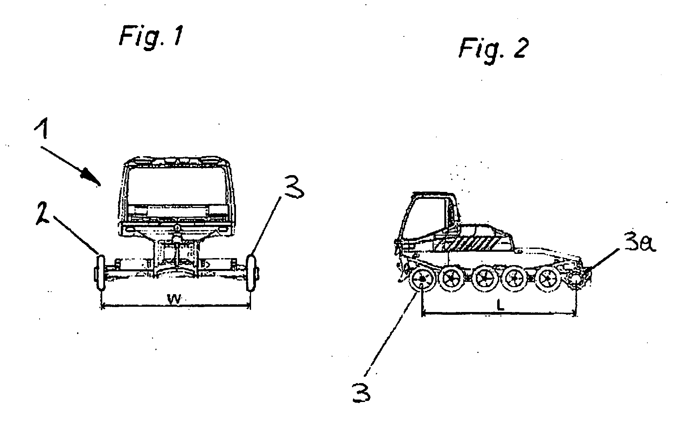

Fig. 1 zeigt eine Frontansicht eines Pistenpräparationsfahrzeuges 1, das mehrere Tragräder und/oder Antriebsräder 2, 3 für eine nicht näher dargestellte Laufkette aufweist. Die Spurbreite W ist der Achsabstand zwischen dem ersten Tragrad (oder Antriebsrad) 2 und dem rechten Tragrad (oder Antriebsrad) 3.

Fig. 2 zeigt eine Seitenansicht des Pistenpräparationsfahrzeuges 1, in der die Traktionslänge L ersichtlich ist. Dabei geht hervor, dass sich die Traktionslänge L aus dem Abstand zwischen der vordersten Achse und der hintersten Achse der Tragräder und/oder Antriebsräder 3, 3a ergibt. Die Traktionslänge L ist dabei auf den Abstand der jeweiligen Drehachsen der Tragräder und/oder Antriebsräder 3, 3a bezogen. Gemäß dem Aspekt der vorliegenden Erfindung ist nunmehr vorgesehen, dass das Steuerverhältnis S berechnet als Traktionslänge L dividiert durch Spurbreite W kleiner gleich 1,4 beträgt und dass der Antrieb eine Leistung von mindestens 400 PS, vorzugsweise jedoch von über 500 PS, aufweist.

Dabei kann es zweckmäßig sein, wenn die Spurbreite vorzugsweise 2,8 m bis 3,3 m, vorzugsweise etwa 3 m, sowie die Traktionslänge 3,9 m bis 4,4 m, vorzugsweise etwa 4,2 m beträgt.

Die vorliegende Erfindung beschränkt sich nicht auf das gezeigte Ausführungsbeispiel, sondern erstreckt sich auf alle Varianten und technische Äquivalente, die in die Reichweite der nachfolgenden Ansprüche fallen können.

## Patentansprüche

1.  Als Raupenfahrzeug ausgebildetes Pistenpräparationsfahrzeug mit einem von einem Antrieb antreibbaren Fahrwerk, das mehrere an Achsen gelagerte Räder für eine Laufkette aufweist, wobei das Fahrwerk eine maximale Spurbreite (W) und zwischen vorderster und hinterster Achse der Räder (3, 3a) eine Traktionslänge (L) aufweist, wobei die Spurbreite (W) der Abstand zwischen rechtem und linkem Rad auf einer gemeinsamen Achse auf gegnüberliegenden Seiten des Fahrzeuges ist, **dadurch gekennzeichnet, dass** das Steuerverhältnis (S) berechnet als Traktionslänge (L) dividiert durch Spurbreite (W) kleiner gleich 1,4 - beträgt und dass der Antrieb eine Leistung von mindestens 450 PS aufweist, vorzugsweise mindestens 500 PS, aufweist.

2.  Pistenpräparationsfahrzeug nach Anspruch 1, **dadurch gekennzeichnet, dass** der Antrieb eine Leistung von über 500 PS aufweist.

3.  Pistenpräparationsfahrzeug nach einem Anspruch 1 oder 2, **dadurch gekennzeichnet, dass** die Spurbreite (W) 2,8 m - 3,3 m, vorzugsweise etwa 3 m, beträgt.

4.  Pistenpräparationsfahrzeug nach einem der Ansprüche 1 bis 2, **dadurch gekennzeichnet, dass** die Traktionslänge (L) 3,9 m - 4,4 m, vorzugsweise etwa 4,2 m, beträgt.

5.  Pistenpräparationsfahrzeug nach einem der Ansprüche 1 bis 4, **dadurch gekennzeichnet, dass** die Räder (2, 3, 3 a) als Antriebsräder und/oder als Tragräder für die Laufkette ausgebildet sind.

## Claims

1.  Ski slope preparation vehicle configured as a tracked vehicle with running gear, which can be driven by a drive and has a plurality of wheels mounted on axles for a crawler, wherein the running gear has a maximum track width (W) and has a traction length (L) between the front and rear axle of the wheels (3, 3a), wherein the track width (W) is the distance between the right and left wheel on a common axle on opposite sides of the vehicle, **characterised in that** the steering ratio (S) calculated as the traction length (L) divided by the track width (W) amounts to less [?] equal to 1.4, and that the drive has a power of at least 450 hp, preferably at least 500 hp.

2.  Ski slope preparation vehicle according to claim 1, **characterised in that** the drive has a power of more than 500 hp.

3.  Ski slope preparation vehicle according to claim 1 or 2, **characterised in that** the track width (W) amounts to 2.8 m - 3.3 m, preferably about 3 m.

4.  Ski slope preparation vehicle according to one of claims 1 to 2, **characterised in that** the traction length (L) amounts to 3.9 m - 4.4 m, preferably about 4.2 m.

5.  Ski slope preparation vehicle according to one of claims 1 to 4, **characterised in that** the wheels (2, 3, 3a) are configured as drive wheels and/or as support wheels for the crawler.

## Revendications

1.  Véhicule de préparation des pistes, réalisé sous la forme d'un véhicule chenillé, comportant un mécanisme de roulement, actionné par un système de traction et muni de plusieurs roues, montées sur des essieux, pour une chenille, le mécanisme de roulement ayant une voie (W) maximum et une longueur de traction (L) entre l'essieu avant et l'essieu arrière des roues (3, 3a), la voie (W) étant la distance entre la roue droite et la roue gauche sur un essieu commun sur les côtés opposés du véhicule, **caractérisé en ce que** le rapport de commande (S), calculé en tant que longueur de traction (L) divisée par la voie (W), est inférieur ou égal à 1,4, et **en ce que** le système de traction a une puissance de 450 CV au moins, de préférence de 500 CV au moins.

2. Véhicule de préparation des pistes selon la revendication 1, **caractérisé en ce que** le système de traction a une puissance supérieure à 500 CV.

3. Véhicule de préparation des pistes selon la revendication 1 ou 2, **caractérisé en ce que** la voie (W) est de l'ordre de 2,8 m à 3,3 m, de préférence environ 3 m.

4. Véhicule de préparation des pistes selon l'une quelconque des revendications 1 à 2, **caractérisé en ce que** la longueur de traction (L) est de l'ordre de 3,9 m à 4,4 m, de préférence environ 4,2 m.

5. Véhicule de préparation des pistes selon l'une quelconque des revendications 1 à 4, **caractérisé en ce que** les roues (2, 3, 3a) sont réalisées sous forme de roues motrices et/ou sous forme de roues de support de la chenille.

## Fig. 1

## Fig. 2